# EUROPEAN PATENT APPLICATION

(11) **EP 4 159 784 A1**
(43) Date of publication of application: **05.04.2023**
(21) Application number: 21200025.1
(22) Date of filing: 30.09.2021
(51) Int. Cl.: C08G 59/20, C08G 59/40, C08G 59/50, C09D 163/10, C09J 163/10

(54) **TWO COMPONENT (2K) COMPOSITION BASED ON EPOXY (METH)ACRYLATE RESIN**

(71) Applicant: Henkel AG & Co. KGaA, 40589 Düsseldorf (DE)
(72) Inventor: Chen, Chunfu, Kanagawa Prefecture, 211-0067 (JP)

(57) **Abstract**

The present application is directed to a two component (2K) composition which is snap curable at room temperature, said composition comprising:
a first component comprising, based on the weight of said component:
from 60 to 100 wt.% of a) at least one epoxy (meth)acrylate compound, said compound having at least one (meth)acrylate group and at least one epoxide group;
from 0 to 20 wt.% of b) at least one epoxide compound not having (meth)acrylate functionality; and,

from 0 to 20 wt.% of c) at least one ethylenically unsaturated non-ionic monomer not having
epoxide functionality;

a second component comprising:
d) i) at least one polyamine having at least two amine hydrogen atoms reactive towards epoxide groups; and,
d) ii) at least one polythiol,

wherein the composition is characterized in that the molar ratio of active hydrogen atoms provided by said second component to the total of epoxide groups and ethylenically unsaturated groups provided by said first component is from 0.75:1 to 1:1.

## Description

### FIELD OF THE INVENTION

The invention is directed to two component (2K) compositions based on epoxy (meth)acrylate resins. More particularly, the present invention is directed to two component (2K) compositions comprising: a first component comprising or consisting of an epoxy (meth)acrylate resin; and, a second component comprising at least one polyamine having at least two amine hydrogen atoms reactive towards epoxide groups and at least one polythiol.

### BACKGROUND OF THE INVENTION

Epoxy resins have found a broad range of application, predominantly on the basis that a particular selection of resin, modifier and cross-linking agent (or curative) can allow the properties of the cured epoxy resin to be tailored to achieve specific performance characteristics.

That versatility being acknowledged, properly cured epoxy resins also possess a plurality of other attributes including *inter alia:* excellent chemical resistance, particularly to alkaline environments; high tensile and compressive strengths; high fatigue strength; low shrinkage upon cure; and, electrical insulation properties and retention thereof upon aging or environmental exposure. However, cured epoxy resin systems can also be adversely characterized by diminished fracture resistance and impact strength, low thermal stability, low pigment retention capacity, poor flexibility and poor hydrophobicity.

The present disclosure is directed to *"two-component (2K) compositions"* which should be understood to be compositions in which a binder component (1) - herein based on epoxide compound(s) - and a hardener component (2) are stored in separate vessels because of their reactivity. The two components are mixed only shortly before application and then react with bond formation and thereby formation of a polymeric network.

While two component (2K) compositions based on epoxide compounds are sometimes capable of a quick initial cure, such rapid curing is usually attained by the use of elevated temperatures which may not be appropriate or practical for all substrates which could be contacted with the composition. Furthermore, using high temperatures to promote a fast rate of cure can also precipitate other problems. Firstly, it can prevent adequate leveling in certain coatings, adhesives or sealant applications. Secondly, it may also limit the breathing of the material: upon high temperature curing, any moisture trapped below the surface of the coating, adhesive or sealant composition may evaporate and induce bubbling or buckling in the cured composition or at least nano-scale material failure. Of course, material failure starts at the nano-scale, which enlarges to micro- and then to macro-scale: exposure to abrasive conditions can accelerate this sequence of failure.

Problematically, at room temperature, two component (2K) epoxy compositions often tend to cure slowly over time and may require from 6 to 8 hours of curing priorto handling, with full cure being achieved in one, two or as many as seven days. Such long processing times can be disadvantageous to many industrial applications. And indeed a slow curing rate can preclude such two (2) component epoxy compositions from being used in room-temperature, assembly-line processing or in other low temperature applications where a high throughput is required.

A number of authors have sought to address the need to develop two component (2K) epoxy compositions which can provide for a rapid build-up of strength but which are curable at room temperature and thus do not need to incur the energetic costs of heating the composition and / or the substrate to which the composition is to be applied. A prevalent approach is to speed up curing times by adding certain low molecular weight additives *(cure accelerators)* to, conventionally, the hardener component of 2K epoxy compositions. Such additives can, however, be deleterious in that they may increase the brittleness of the cured composition and reduce dynamic strength performance. Further, low molecular weight additives - which are not incorporated into the polymer matrix - can promote over-plasticization of the curing composition in some circumstances. As a consequence of these effects, the use of cure accelerators must usually be compensated for through the addition of tougheners to reduce brittleness.

US Patent No. 4,668 736A (3M Company) describes a two-part composition comprising: (a) in a first part, from 75 to 100 parts by weight (pbw) of at least one curable glycidyl ether epoxide group-containing compound; (b) in a second part, at least one amino-terminated aliphatic polyether curing agent; (c) in at least one of said parts, from 8 to 40 pbw of at least one polymeric toughening agent providing both a rubbery phase and a thermoplastic phase; and, (d) in at least one of said parts, from 1 to 10 pbw of at least one metal salt catalyst selected from calcium nitrate, lanthanum nitrate or metal salts having calcium, strontium, or barium cations and perchlorate or trifluoromethane sulfonate anions.

WO2009/025991 A1 (Dow Global Technologies LLC) discloses a two-component (2K) epoxy-based structural adhesive which may be cured at approximately room temperature. The adhesive comprises: a first component including an epoxy resin and a reactive toughener; and, a hardener component, including from 15 to 50 wt.% of an amine-terminated polyether, from 4 to 40 wt.% of an amine terminated rubber having a glass transition temperature of -40°C or below, and from 10 to 30 wt.% of an amine-terminated polyamide having a melting temperature of ≤50°C.

US 2017/0335147 A1 (Dow Global Technologies LLC) discloses a two component (2K) adhesive composition achieving a set time of 50 minutes or less, said composition comprising: a first component (A) including, based on the weight of the component, from 5 to 50 wt.% of a first reactive toughener and from 20 to 65 wt.% of a liquid epoxy resin; and, a second hardener component (B), based on the weight of the component, from 10 to 35 wt.% of a second reactive toughener, from 20 to 50 wt.% of a polyether diamine or polyether triamine having a molecular weight of 200 to 6000 daltons; a curing accelerator; and, from 10 to 25 wt.% of at least one of triethylene tetraamine, diethylene triamine, isophorone diamine and ethylene diamine. The first and second reactive tougheners are each a polyurethane, polyurea or polyurea-urethane prepolymer terminated with a capping group comprising more than one phenolic -OH group.

The present inventors consider that a need exists in the art to develop two (2K) compositions based on epoxy resins which can be cured rapidly at room temperature without requiring the presence of cure accelerators or tougheners.

### STATEMENT OF THE INVENTION

In accordance with a first aspect of the invention there is provided a two component (2K) composition which is snap-curable at room temperature, said composition comprising:
a first component comprising, based on the weight of said component:
   from 60 to 100 wt.% of a) at least one epoxy (meth)acrylate compound, said compound having at least one (meth)acrylate group and at least one epoxide group;
   from 0 to 20 wt.% of b) at least one epoxide compound not having (meth)acrylate functionality; and,
   from 0 to 20 wt.% of c) at least one ethylenically unsaturated non-ionic monomer not having epoxide functionality;
a second component comprising:
   d) i) at least one polyamine having at least two amine hydrogen atoms reactive towards epoxide groups; and,
   d) ii) at least one polythiol,
   wherein the composition is characterized in that the molar ratio of active hydrogen atoms provided by said second component to the total of epoxide groups and ethylenically unsaturated groups provided by said first component is from 0.75:1 to 1:1.

In an important embodiment, the snap curable, two component (2K) composition comprises:
a first component comprising, based on the weight of said component:
   from 70 to 100 wt.%, preferably from 80 to 100 wt.% of a) said at least one epoxy (meth)acrylate compound, said compound having at least one (meth)acrylate group and at least one epoxide group;
   from 0 to 15 wt.%, preferably from 0 to 10 wt.% of b) said at least one epoxide compound not having (meth)acrylate functionality; and,
   from 0 to 15 wt.%, preferably from 0 to 10 wt.% of c) said at least one ethylenically unsaturated non-ionic monomer not having epoxide functionality;
a second component comprising:
   d) i) at least one polyamine having at least two amine hydrogen atoms reactive towards epoxide groups; and,
   d) ii) at least one polythiol,
   wherein the composition is characterized in that the molar ratio of active hydrogen atoms provided by said second component to the total of epoxide groups and ethylenically unsaturated groups provided by said first component is from 0.8:1 to 1:1.

As used herein, the term *"snap curable"* defines the ability to cure within 60 seconds of exposure to the stated temperature condition. It is noted, for completeness, that the ability to snap cure does not preclude the capability of compositions of the present invention to cure within an even shorter time - for instance less than 50 seconds or less than 40 seconds - when exposed to elevated temperatures or intentional photo-irradiation.

As regards the first component, it is preferred that the or each epoxy (meth)acrylate compound a) be characterized by an equivalent weight of the total of said epoxide and said (meth)acrylate groups of from 100 to 700 g/eq, preferably 120 to 320 g/eq.

As regards the second or hardener component, it is preferred that: said at least one polyamine d) i) provides from 5 to 80% of the total number of active hydrogen atoms in the composition; and, said at least one polythiol compound d) ii) provides from 20 to 95% of the total number of active hydrogen atoms in the composition.

Independently of or additional to that characterization, it is preferred that at least one and desirably all of the following conditions are met by the second component:
1) the or each polyamine d) i) included in the component contains primary and / or secondary amine groups and has an amine hydrogen equivalent weight (AHEW) of not more than 150 g/eq;
2) the or each polythiol d) ii) included in the component has from 2 to 5 thiol groups; and,
3) the or each polythiol d) ii) included in the component has a thiol equivalent weight of from 100 to 700 g/eq, preferably from 100 to 250 g/eq.

The two component (2K) compositions should be substantially free of free-radical photoinitiators and / or thermal free-radical initiators. Indeed, effective compositions according to the present disclosure which are free of both thermal free-radical initiators and free-radical photoinitiators have been shown to cure effectively at room temperature or under, independently, heating and photo-irradiation. For completeness, in important embodiments, the compositions of the present invention may be substantially free of free-radical initiators.

In accordance with a second aspect of the invention, there is provided the use of the two component (2K) composition as defined hereinabove and in the appended claims as a coating, adhesive or sealant. The use of the two component (2K) composition in composite materials is also envisaged.

### DEFINITIONS

As used herein, the singular forms "a", *"an"* and *"the"* include plural referents unless the context clearly dictates otherwise.

The terms *"comprising", "comprises"* and *"comprised* of" as used herein are synonymous with *"including", "includes", "containing"* or *"contains",* and are inclusive or open-ended and do not exclude additional, non-recited members, elements or method steps.

As used herein, the term *"consisting of"* excludes any element, ingredient, member or method step not specified.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Further, in accordance with standard understanding, a weight range represented as being *"from 0 to x"* specifically includes 0 wt.%: the ingredient defined by said range may be absent from the composition or may be present in the composition in an amount up to x wt.%.

The words *"preferred", "preferably", "desirably"* and *"particularly"* are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word *"may"* is used in a permissive sense - that is meaning to have the potential to - rather than in the mandatory sense.

As used herein, room temperature is 23°C plus or minus 2°C.

The molecular weights referred to in this specification - to describe to macromolecular, oligomeric and polymeric components of the curable compositions - can be measured with gel permeation chromatography (GPC) using polystyrene calibration standards, such as is done according to ASTM 3536.

Viscosities of the compositions described herein are, unless otherwise stipulated, measured using the Brookfield Viscometer at standard conditions of 20°C and 50% Relative Humidity (RH). The method of calibration, the spindle type and rotation speed of the Brookfield Viscometer are chosen according to the instructions of the manufacturer as appropriate for the composition to be measured.

Broadly, *"gel time"* describes the time at which a mixture is substantially incapable of flow: in molecular terms, gel time references the point at which an infinite network is formed. As used hereinafter, the quantified *"gel time"* means that time at which a viscosity of 75000 centipoise is attained, said gel time of the composition being determined by Gardner Standard Model Gel Timers at a temperature of 25°C and 50% Relative Humidity (RH).

As used herein, the term *"monomer"* refers to a substance that can undergo a polymerization reaction to contribute constitutional units to the chemical structure of a polymer. The term *"monofunctional",* as used herein, refers to the possession of one polymerizable moiety. The term *"polyfunctional",* as used herein, refers to the possession of more than one polymerizable moiety.

As used herein, the term *"equivalent (eq.")* relates, as is usual in chemical notation, to the relative number of reactive groups present in the reaction.

The term *"equivalent weight"* as used herein refers to the molecular weight divided by the number of a function concerned. As such, *"epoxide equivalent weight"* (EEW) means the weight of resin, in grams, that contains one equivalent of epoxide. Analogously, the *"Amine-Hydrogen Equivalent Weight"* (AHEW) is defined as the molecular weight of the amine compound divided by the Amine Hydrogen Functionality (AHF).

As used herein, the term *"epoxide"* denotes a compound characterized by the presence of at least one cyclic ether group, namely one wherein an ether oxygen atom is attached to two adjacent carbon atoms thereby forming a cyclic structure. The term is intended to encompass monoepoxide compounds, polyepoxide compounds (having two or more epoxide groups) and epoxide terminated prepolymers. The term *"monoepoxide compound"* is meant to denote epoxide compounds having one epoxy group. The term *"polyepoxide compound"* is meant to denote epoxide compounds having at least two epoxy groups. The term *"diepoxide compound"* is meant to denote epoxide compounds having two epoxy groups.

The epoxide may be unsubstituted but may also be inertly substituted. Exemplary inert substituents include chlorine, bromine, fluorine and phenyl.

The term *"polythiol"* as used herein refers to simple or complex organic compounds having at least two pendant or terminal thiol groups (-SH) per molecule. Such polythiols can generally be represented by the formula R^{t} ―(SH)_{c} wherein c is an integer having a value of at least 2 and R^{t} is a polyvalent organic moiety of valence c.

As used herein the term *"active hydrogen atom"* means a hydrogen atom capable of reacting according to the Zerewitinoff reaction.

As used herein, the term *"free radical initiator"* refers to any chemical species which, upon exposure to sufficient energy - in the form of light or heat, for example - decomposes into two parts which are uncharged, but which each possess at least one unpaired electron. Thus a thermal free radical initiator generates free upon exposure to heat. And known thermal free radical initiators include, but are not limited to, peroxide compounds, azo compounds and persulfate compounds.

The term *"photoinitiator"* as used herein denotes a compound which can be activated by an energy-carrying activation beam - such as electromagnetic radiation - upon irradiation therewith. Specifically, a *"free-radical photoinitator"* herein refers to a photoactive compound that generates free radicals, which radicals could herein initiate polymerization or reaction by addition to C=C double bonds present in the compositions. Such free-radical photoinitiators are conventionally categorized into Norrish type I and Norrish type II photoinitiators. A Norrish type I radical photoinitiator undergoes the Norrish type I reaction when exposed to actinic radiation: said reaction is defined by IUPAC as α-deavage of an excited carbonyl compound leading to an acyl-alkyl radical pair (from an acyclic carbonyl compound) or an acyl-alkyl biradical (from a cyclic carbonyl compound) as a primary photoproduct. A Norrish type II radical photoinitiator undergoes the Norrish type II reaction when exposed to actinic radiation: that reaction is defined by IUPAC as the photochemical abstraction of a γ-hydrogen by an excited carbonyl compound to produce a 1,4-biradical as a primary photoproduct.

As used herein, *"(meth)acryl"* is a shorthand term referring to *"acryl"* and/or *"methacryl".* Thus the term *"(meth)acrylate"* refers collectively to acrylate and methacrylate.

As used herein, *"C₁-Cₙ alkyl"* group refers to a monovalent group that contains 1 to n carbons atoms, that is a radical of an alkane and includes straight-chain and branched organic groups. As such, a *"C₁₋C₁₈ alkyl"* group refers to a monovalent group that contains from 1 to 18 carbons atoms, that is a radical of an alkane and includes straight-chain and branched organic groups. Examples of alkyl groups include, but are not limited to: methyl; ethyl; propyl; isopropyl; n-butyl; isobutyl; sec-butyl; tert-butyl; n-pentyl; n-hexyl; n-heptyl; and, 2-ethylhexyl. In the present invention, such alkyl groups may be unsubstituted or may be substituted with one or more halogen. Where applicable for a given moiety (R), a tolerance for one or more non-halogen substituents within an alkyl group will be noted in the specification.

The term "*C₁-C₁₈ hydroxyalkyl"* as used herein refers to a HO-(alkyl) group having from 1 to 18 carbon atoms, where the point of attachment of the substituent is through the oxygen-atom and the alkyl group is as defined above.

An *"alkoxy group"* refers to a monovalent group represented by -OA where A is an alkyl group: non-limiting examples thereof are a methoxy group, an ethoxy group and an iso-propyloxy group. The term "*C₁-C₁₈ alkoxyalkyl"* as used herein refers to an alkyl group having an alkoxy substituent as defined above and wherein the moiety (*alkyl-O-alkyl*) comprises in total from 1 to 18 carbon atoms: such groups include methoxymethyl (―CH₂OCH₃), 2-methoxyethyl (―CH₂CH₂OCH₃) and 2-ethoxyethyl. Analogously, the term "*C₇-C₁₈ alkoxyaryl"* as used herein refers to an aryl group having an alkoxy substituent as defined above and wherein the moiety (*aryl-O-alkyl*) comprises in total from 7 to 18 carbon atoms.

The term "*C₂-C₄ alkylene"* as used herein, is defined as saturated, divalent hydrocarbon radical having from 2 to 4 carbon atoms.

The term "*C₃* ―*C₁₈ cycloalkyl"* is understood to mean a saturated, mono- or polycyclic hydrocarbon group having from 3 to 18 carbon atoms. In the present invention, such cycloalkyl groups may be unsubstituted or may be substituted with one or more halogen. Where applicable for a given moiety (R), a tolerance for one or more non-halogen substituents within a cycloalkyl group will be noted in the specification. Examples of cycloalkyl groups include: cyclopropyl; cyclobutyl; cyclopentyl; cyclohexyl; cycloheptyl; cyclooctyl; adamantane; and, norbornane.

As used herein, an "*C₆-C₁₈ aryl"* group used alone or as part of a larger moiety - as in *"aralkyl group"* - refers to monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. In the present invention, such aryl groups may be unsubstituted or may be substituted with one or more halogen. Where applicable for a given moiety (R), a tolerance for one or more non-halogen substituents within an aryl group will be noted in the specification. Exemplary aryl groups include: phenyl; (C₁-C₄)alkylphenyl, such as tolyl and ethylphenyl; indenyl; naphthalenyl, tetrahydronaphthyl, tetrahydroindenyl; tetrahydroanthracenyl; and, anthracenyl. And a preference for phenyl groups may be noted.

As used herein, *"alkylaryl"* refers to alkyl-substituted aryl groups, both groups being as defined above. Further, as used herein *"aralkyl"* means an alkyl group substituted with an aryl radical as defined above.

As used herein, *"metallic"* means any type of metal, metal alloy, or mixture thereof.

The present compositions may be defined herein as being *"substantially free"* of certain compounds, elements, ions or other like components. The term *"substantially free"* is intended to mean that the compound, element, ion or other like component is not deliberately added to the composition and is present, at most, in only trace amounts which will have no (adverse) affect on the desired properties of the composition. An exemplary trace amount is less than 1000 ppm by weight of the composition. The term *"substantially free"* expressly encompasses those embodiments where the specified compound, element, ion, or other like component is completely absent from the composition or is not present in any amount measurable by techniques generally used in the art.

### DETAILED DESCRIPTION OF THE INVENTION

### FIRST COMPONENT

As defined above, the first component of the composition comprises or consists of a) at least one epoxy (meth)acrylate compound. This does not preclude the presence in the first component of one or both of: at least one epoxide functional compound which does not possess (meth)acrylate functionality; and, an ethylenically unsaturated non-ionic monomer which does not possess epoxide functionality.

### 1a) Epoxy (meth)acrylate compound

The first component of the composition comprises from 60 to 100 wt.%, based on the weight of said component, of a) at least one epoxy (meth)acrylate compound, said compound having at least one (meth)acrylate group and at least one epoxide group. It is preferred that the first component comprises from 70 to 100 wt.%, preferably from 80 to 100 wt.%, of a) said least one epoxy (meth)acrylate compound, based on the weight of said component.

The or each epoxy (meth)acrylate compound included in the first component should preferably be characterized by an equivalent weight of the total of said epoxide and said (meth)acrylate groups of from 100 to 700 g/eq, in particular from 120 to 320 g/eq.

The epoxy (meth)acrylate compound is obtainable via the reaction of acrylic acid or methacrylic acid with a polyepoxide compound at stoichiometric ratio such that at least one (meth)acrylate group and at least one epoxide group are retained in the obtained adduct. An epoxy compound with a desired (meth)acrylation proportion can be obtained by suitably changing the amounts of polyepoxide compound and (meth)acrylic acid to be reacted. For instance, the amount of (meth)acrylic acid to be reacted per equivalent of epoxide group should be from 0.1 to 0.7 equivalents.

Without intention to limit the present invention, suitable reactant polyepoxide compounds may be liquid, solid or in solution in solvent. Based on the above characterization, such reactant polyepoxide compounds should have an epoxide equivalent weight of from 100 to 700 g/eq, for example from 120 to 320 g/eq. And generally, diepoxide compounds having epoxide equivalent weights of less than 500 g/eq. or even less than 400 g/eq. are preferred: this is predominantly from a costs standpoint, as in their production, lower molecular weight epoxy resins require more limited processing in purification.

As examples of types or groups of polyepoxide compounds which may be reacted with (meth)acrylic acid, mention may be made of: polyglycidyl ethers of polyhydric alcohols and polyhydric phenols; polyglycidyl esters of polycarboxylic acids; and, epoxidized polyethylenically unsaturated hydrocarbons.

The use of diepoxide compounds is preferred. For instance, suitable diglycidyl ether compounds may be aromatic, aliphatic or cycloaliphatic in nature and, as such, can be derivable from dihydric phenols and dihydric alcohols. And useful classes of such diglycidyl ethers are: diglycidyl ethers of aliphatic and cycloaliphatic diols, such as 1,2-ethanediol, 1,4-butanediol, 1,6-hexanediol, 1,8-octanediol, 1,12-dodecanediol, cyclopentane diol and cyclohexane diol; bisphenol A based diglycidylethers; bisphenol F diglycidyl ethers; diglycidyl o-phthalate, diglycidyl isophthalate and diglycidyl terephthalate; polyalkyleneglycol based diglycidyl ethers, in particular polypropyleneglycol diglycidyl ethers; and, polycarbonatediol based glycidyl ethers. Other suitable diepoxides which might also be mentioned include: diepoxides of double unsaturated fatty acid C₁-C₁₈ alkyl esters; butadiene diepoxide; polybutadiene diglycidyl ether; vinylcyclohexene diepoxide; and, limonene diepoxide.

Further illustrative polyepoxide compounds include but are not limited to: glycerol polyglycidyl ether; trimethylolpropane polyglycidyl ether; pentaerythritol polyglycidyl ether; diglycerol polyglycidyl ether; polyglycerol polyglycidyl ether; and, sorbitol polyglycidyl ether.

And examples of highly preferred reactant polyepoxide compounds include: bisphenol-A epoxy resins; bisphenol-F epoxy resins; bisphenol-A/F epoxy resin blends; polypropylene glycol diglycidyl ethers, such as DER^{™} 732; epoxy novolac resins, such as DEN^{™} 438; brominated epoxy resins such as DER^{™} 542; castor oil triglycidyl ether, such as ERISYS^{™} GE-35H; polyglycerol-3-polyglycidyl ether, such as ERISYS^{™} GE-38; and, sorbitol glycidyl ether, such as ERISYS^{™} GE-60.

It will be noted that the polyepoxide compounds useful in forming the epoxy acrylate adducts may be monomeric or oligomeric. It is considered that the inclusion of monomeric epoxy (meth)acrylate compounds in the present composition will generally yield a cured product having hard, abrasion-resistant characteristics. Conversely, the inclusion of oligomeric multifunctional (meth)acrylates will generally yield a slightly softer, but more flexible cured product. Of course, the use of both monomeric and oligomeric epoxy (meth)acrylate compounds might balance the desired properties of the cured product.

As will be recognized by the skilled artisan, the partial (meth)acrylation of the epoxide functional groups of a reactant polyepoxide is typically performed in the presence of a basic catalyst, of which mention may be made of triphenylphosphine (PPh₃), N,N'-dimethyltoluidine, pyridine, imidazole, triethylamine and tributylamine. The retention of such catalysts in the partially acrylated end-product can, however, be deleterious to the storage stability of that product and, as regards the present disclosure, might preclude the first component from containing further epoxide compounds and ethylenically unsaturated compounds, as reactive diluents for example. In order to prevent cross-linking reactions during storage - and the concomitant thickening and gelation of the product - the catalyst residue should desirably be removed from the epoxy (meth)arylate compound before it is used in the first component of the present composition. Illustrative methods for removing residual catalyst are disclosed *inter alia* in: WO2011/078113; JP-Hei-5-332031; JP-Hei-11-012345; JP 2002-145984 A; JP 2004-244543; JP 2013-103950; and, JP2019-052273A.

In an alternative embodiment, a polymerization inhibitor - such as a quinone or quinone methide - might be added to the partially (meth)acrylated reaction product prior to its storage. However, this is not necessarily preferred as such inhibitors constitute an impurity which would be present in the first component.

The above aside, suitable epoxy (meth)arylate compounds having at least one (meth)acrylate group and at least one epoxide group may be obtained from commercial sources. Representative commercial epoxy (meth)arylate compounds include but are not limited to: glycidyl methacrylate (GMA) available from Sigma Aldrich; Uvacure^{®} 1561 and Uvacure^{®} 1562 available from Daicel-Allnex Ltd.; and, HCT-1 available from Henkel Corporation.

### 1b) Epoxide Compounds

The first component of the composition of the present disclosure may comprise from 0 to 20 wt.%, based on the weight of said component, of b) at least one epoxide compound not having (meth)acrylate functionality. For example, the first component of the composition may contain from 0 to 15 wt.% or from 0 to 10 wt.% of b) said at least one epoxide compound, based on the weight of said component.

The epoxide compounds may include monoepoxide compounds, polyepoxide compounds and combinations thereof. Thus the epoxide compounds may be pure compounds but equally may be mixtures epoxy functional compounds, including mixtures of compounds having different numbers of epoxy groups per molecule. An epoxide compound may be saturated or unsaturated, aliphatic, cycloaliphatic, aromatic or heterocyclic and may be substituted. Further, the epoxide compound may also be monomeric or polymeric.

Without intention to limit the present invention, illustrative monoepoxide compounds include: alkylene oxides; epoxy-substituted cycloaliphatic hydrocarbons, such as cyclohexene oxide, vinylcyclohexene monoxide, (+)-cis-limonene oxide, (+)-cis,trans-limonene oxide, (-)-cis,trans-limonene oxide, cyclooctene oxide, cyclododecene oxide and α-pinene oxide; epoxy-substituted aromatic hydrocarbons; monoepoxy substituted alkyl ethers of monohydric alcohols or phenols, such as the glycidyl ethers of aliphatic, cycloaliphatic and aromatic alcohols; monoepoxy-substituted alkyl esters of monocarboxylic acids, such as glycidyl esters of aliphatic, cycloaliphatic and aromatic monocarboxylic acids; monoepoxy-substituted alkyl esters of polycarboxylic acids wherein the other carboxy group(s) are esterified with alkanols; alkyl and alkenyl esters of epoxy-substituted monocarboxylic acids; epoxyalkyl ethers of polyhydric alcohols wherein the other OH group(s) are esterified or etherified with carboxylic acids or alcohols; and, monoesters of polyhydric alcohols and epoxy monocarboxylic acids, wherein the other OH group(s) are esterified or etherified with carboxylic acids or alcohols.

By way of example, the following glycidyl ethers might be mentioned as being particularly suitable monoepoxide compounds for use herein: methyl glycidyl ether; ethyl glycidyl ether; propyl glycidyl ether; butyl glycidyl ether; pentyl glycidyl ether; hexyl glycidyl ether; cyclohexyl glycidyl ether; octyl glycidyl ether; 2-ethylhexyl glycidyl ether; allyl glycidyl ether; benzyl glycidyl ether; phenyl glycidyl ether; 4-tert-butylphenyl glycidyl ether; 1-naphthyl glycidyl ether; 2-naphthyl glycidyl ether; 2-chlorophenyl glycidyl ether; 4-chlorophenyl glycidyl ether; 4-bromophenyl glycidyl ether; 2,4,6-trichlorophenyl glycidyl ether; 2,4,6-tribromophenyl glycidyl ether; pentafluorophenyl glycidyl ether; o-cresyl glycidyl ether; m-cresyl glycidyl ether; and, p-cresyl glycidyl ether.

In an important embodiment, the monoepoxide compound conforms to Formula (BI) herein below: 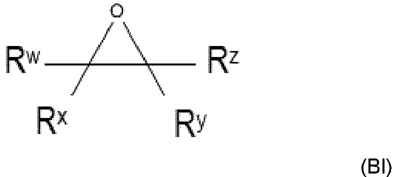 wherein: R^{w}, R^{x}, R^{y} and R^{z} may be the same or different and are independently selected from hydrogen, a halogen atom, a C₁-C₈ alkyl group, a C₃ to C₁₀ cycloalkyl group, a C₂-C₁₂ alkenyl, a C₆-C₁₈ aryl group or a C₇-C₁₈ aralkyl group, with the proviso that at least one of R^{y} and R^{z} is not hydrogen.

It is preferred that R^{w}, R^{x} and R^{y} are hydrogen and R^{z} is either a phenyl group or a C₁-C₈ alkyl group and, more preferably, a C₁-C₄ alkyl group.

Having regard to this embodiment, exemplary monoepoxides include: ethylene oxide; 1,2-propylene oxide (*propylene oxide*)*;* 1,2-butylene oxide; cis-2,3-epoxybutane; trans-2,3-epoxybutane; 1,2-epoxypentane; 1,2-epoxyhexane; 1,2-heptylene oxide; decene oxide; butadiene oxide; isoprene oxide; and, styrene oxide.

In the present invention, reference is made to using at least one monoepoxide compound selected from the group consisting of: ethylene oxide; propylene oxide; cyclohexene oxide; (+)-cis-limonene oxide; (+)-cis,trans-limonene oxide; (-)-cis,trans-limonene oxide; cyclooctene oxide; and, cyclododecene oxide.

Again, without intention to limit the present invention, suitable polyepoxide compounds may be liquid, solid or in solution in solvent. Further, such polyepoxide compounds should have an epoxide equivalent weight of from 100 to 700 g/eq, for example from 120 to 320 g/eq. And generally, diepoxide compounds having epoxide equivalent weights of less than 500 g/eq. or even less than 400 g/eq. are preferred: this is predominantly from a costs standpoint, as in their production, lower molecular weight epoxy resins require more limited processing in purification.

As examples of types or groups of polyepoxide compounds which may be included in the composition, mention may be made of: glycidyl ethers of polyhydric alcohols and polyhydric phenols; glycidyl esters of polycarboxylic acids; and, epoxidized polyethylenically unsaturated hydrocarbons, esters, ethers and amides.

Suitable diglycidyl ether compounds may be aromatic, aliphatic or cycloaliphatic in nature and, as such, can be derivable from dihydric phenols and dihydric alcohols. And useful classes of such diglycidyl ethers are: diglycidyl ethers of aliphatic and cycloaliphatic diols, such as 1,2-ethanediol, 1,4-butanediol, 1,6-hexanediol, 1,8-octanediol, 1,12-dodecanediol, cyclopentane diol and cyclohexane diol; bisphenol A based diglycidylethers; bisphenol F diglycidyl ethers; polyalkyleneglycol based diglycidyl ethers, in particular polypropyleneglycol diglycidyl ethers; and, polycarbonatediol based glycidyl ethers.

Further illustrative polyepoxide compounds include but are not limited to: glycerol polyglycidyl ether; trimethylolpropane polyglycidyl ether; pentaerythritol polyglycidyl ether; diglycerol polyglycidyl ether; polyglycerol polyglycidyl ether; and, sorbitol polyglycidyl ether.

Glycidyl esters of polycarboxylic acids having utility in the present invention are derived from polycarboxylic acids which contain at least two carboxylic acid groups and no other groups reactive with epoxide groups. The polycarboxylic acids can be aliphatic, cycloaliphatic, aromatic and heterocyclic. The preferred polycarboxylic acids are those which contain not more than 18 carbon atoms per carboxylic acid group of which suitable examples include but are not limited to: oxalic acid; sebacic acid; adipic acid; succinic acid; pimelic acid; suberic acid; glutaric acid; dimer and trimer acids of unsaturated fatty acids, such as dimer and trimer acids of linseed fatty acids; phthalic acid; isophthalic acid; terephthalic acid; trimellitic acid; trimesic acid; phenylene-diacetic acid; chlorendic acid; hexahydrophthalic acid, in particular hexahydroorthophthalic acid (1,2-cyclohexanedicarboxylic acid); diphenic acid; naphthalic acid; polyacid terminated esters of di-basic acids and aliphatic polyols; polymers and co-polymers of (meth)acrylic acid; and, crotonic acid.

Other suitable diepoxides which might also be mentioned include: diepoxides of double unsaturated fatty acid C₁-C₁₈ alkyl esters; butadiene diepoxide; polybutadiene diglycidyl ether; vinylcyclohexene diepoxide; and, limonene diepoxide.

And examples of highly preferred polyepoxide compounds include: bisphenol-A epoxy resins, such as DER^{™} 331, DER^{™} 332, DER^{™} 383, JER^{™} 828 and Epotec YD 128; bisphenol-F epoxy resins, such as DER^{™} 354; bisphenol-A/F epoxy resin blends, such as DER^{™} 353; aliphatic glycidyl ethers, such as DER^{™} 736; polypropylene glycol diglycidyl ethers, such as DER^{™} 732; solid bisphenol-A epoxy resins, such as DER^{™} 661 and DER^{™} 664 UE; solutions of bisphenol-A solid epoxy resins, such as DER^{™} 671-X75; epoxy novolac resins, such as DEN^{™} 438; brominated epoxy resins such as DER^{™} 542; castor oil triglycidyl ether, such as ERISYS^{™} GE-35H; polyglycerol-3-polyglycidyl ether, such as ERISYS^{™} GE-38; sorbitol glycidyl ether, such as ERISYS^{™} GE-60; and, bis(2,3-epoxypropyl)cyclohexane-1,2-dicarboxylate, available as Lapox Arch-11.

The above aside, the first component of the composition can in certain embodiments comprise glycidoxy alkyl alkoxy silanes having the formula (BII): 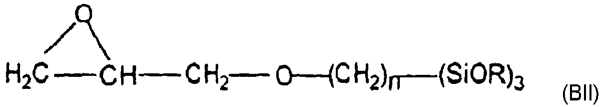 wherein:
each R is independently selected from methyl or ethyl; and,
n is from 1-10.

Exemplary silanes include but are not limited to: γ-glycidoxy propyl trimethoxy silane, γ-glycidoxy ethyl trimethoxy silane, γ-glycidoxy methyl trimethoxy silane, γ-glycidoxy methyl triethoxy silane, γ-glycidoxy ethyl triethoxy silane, γ-glycidoxy propyl triethoxy silane; and, 8-glycidooxyoctyl trimethoxysilane. When present, the epoxide functional silanes should constitute less than less than 20 wt.%, preferably less than 10 wt.% or less than 5 wt.%, based on the total weight of the epoxide functional compounds in the first component (a), b)).

Whilst it does not represent a preferred embodiment, the present invention does not preclude the first component of the curable compositions further comprising one or more cyclic monomers selected from the group consisting of: oxetanes; cyclic carbonates; cyclic anhydrides; and, lactones. The disclosures of the following citations may be instructive in disclosing suitable cyclic carbonate functional compounds: US Patent No. 3,535,342; US Patent No. 4,835,289; US Patent No. 4,892,954; UK Patent No. GB-A-1,485,925; and, EP-A-0 119 840. However, such cyclic co-monomers should constitute less than 20 wt.%, preferably less than 10 wt.% or less than 5 wt.%, based on the total weight of the epoxide functional compounds in the first component (a), b)).

### 1c) Ethylenically unsaturated non-ionic monomer

The first component of the composition of the present disclosure comprises from 0 to 20 wt.%, based on the weight of said component, of c) at least one ethylenically unsaturated non-ionic monomer not having epoxide functionality. It is preferred that the first component of composition comprises from 0 to 15 wt.%, for example from 0 to 10 wt.% of said at least one ethylenically unsaturated non-ionic monomer, based on the weight of said component. Such monomers can, in principle, be any ethylenically unsaturated non-ionic monomer. However, the invention is particularly applicable to compositions of which (meth)acrylate monomers constitute at least 60 wt.%, preferably at least 75 wt.%, of the total amount of ethylenically unsaturated non-ionic monomers present in the composition.

### 1c)-1 Aliphatic and Cycloaliphatic (Meth)acrylate Monomers

The first component of the composition may comprise c1) at least one (meth)acrylate monomer represented by Formula CI:

H₂C=CGCO₂R¹ (CI)

wherein:
G is hydrogen, halogen or a C₁ alkyl group; and,
R¹ is selected from: C₁-C₃₀ alkyl; C₁-C₁₈ hydroxyalkyl; C₁-C₁₈ alkoxyalkyl; C₂-C₃₀ heteroalkyl; C₃-C₃₀ cycloalkyl; C₂-C₈ heterocycloalkyl; C₂-C₂₀ alkenyl; and, C₂-C₁₂ alkynyl.

For example, R¹ may be selected from: C₁-C₁₈ alkyl, C₁-C₁₂ hydroxyalkyl; C₂-C₁₈ heteroalkyl, C₃-C₁₈ cycloalkyl; C₂-C₈ heterocycloalkyl; C₂-C₈ alkenyl, and, C₂-C₈ alkynyl.

Desirably, said monomer(s) c1) are characterized in that R¹ is selected from C₁-C₁₈ alkyl, C₁-C₆ hydroxyalkyl and C₃-C₁₈ cycloalkyl.

Examples of (meth)acrylate monomers c1) in accordance with Formula (CI) include but are not limited to: methyl (meth)acrylate; ethyl (meth)acrylate; butyl (meth)acrylate; hexyl (meth)acrylate; 2-ethylhexyl (meth)acrylate; dodecyl (meth)acrylate; lauryl (meth)acrylate; cyclohexyl (meth)acrylate; isobornyl (meth)acrylate; 2-hydroxyethyl (meth)acrylate (HEMA); 2-hydroxypropyl (meth)acrylate; ethylene glycol monomethyl ether (meth)acrylate; ethylene glycol monoethyl ether (meth)acrylate; ethylene glycol monododecyl ether (meth)acrylate; diethylene glycol monomethyl ether (meth)acrylate; trifluoroethyl (meth)acrylate; and, perfluorooctyl (meth)acrylate.

### 1c)-2 Aromatic (Meth)acrylate Monomers

The first component of the composition may comprise c2) at least one (meth)acrylate monomer represented by Formula CII:

H₂C=CQCO₂R² (CII)

wherein:
Q is hydrogen, halogen or a C₁ alkyl group; and,
R² is selected from C₆-C₁₈ aryl, C₁-C₉ heteroaryl, C₇-C₁₈ alkoxyaryl, C₇-C₁₈ alkaryl and C₇-C₁₈ aralkyl.

Exemplary (meth)acrylate monomers c2) in accordance with Formula (CII) - which may be used alone or in combination - include but are not limited to: benzyl (meth)acrylate; phenoxyethyl (meth)acrylate; and, phenoxypropyl (meth)acrylate.

### 1c)-3 (Meth)acrylate-functionalized Oligomer

The first component of the composition may comprise c3) at least one (meth)acrylate functionalized oligomer selected from the group consisting of (meth)acrylate-functionalized polyurethanes, (meth)acrylate-functionalized polybutadienes, (meth)acrylic polyol (meth)acrylates, polyester (meth)acrylate oligomers, polyamide (meth)acrylate oligomers and polyether (meth)acrylate oligomers.

Said oligomers c3) may have one or more acrylate and / or methacrylate groups attached to the oligomeric backbone, which (meth)acrylate functional groups may be in a terminal position on the oligomer and / or may be distributed along the oligomeric backbone. It is preferred that the or each (meth)acrylate functionalized oligomer c3) included in the composition: i) has two or more (meth)acrylate functional groups per molecule; and / or, ii) has a weight average molecular weight (Mw) of from 300 to 1000 daltons.

### 1c)-4 Further ethylenically unsaturated non-ionic monomers

The present invention does not preclude the presence of additional ethylenically unsaturated non-ionic monomers not conforming to the definitions of c1)-c3) given herein. However, the addition of such further monomers should be constrained by the condition that said further monomers c4) do not exceed 30 wt.% of the total amount of ethylenically unsaturated non-ionic monomers.

Without intention to limit the present invention, such further ethylenically unsaturated non-ionic monomers may include: α,β-monoethylenically unsaturated monocarboxylic acids; α,β-monoethylenically unsaturated dicarboxylic acids; C₁-C₆ alkyl half-esters of α,β-monoethylenically unsaturated dicarboxylic acids; α,β-monoethylenically unsaturated tricarboxylic acids; C₁-C₆ alkyl esters of α,β-monoethylenically unsaturated tricarboxylic acids bearing at least one free carboxylic acid group; ethylenically unsaturated sulfonic acids, such as vinylsulfonic acid, styrenesulfonic acid and acrylamidomethylpropanesulfonic acid; maleimide monomers, such as maleimide, methylmaleimide, ethylmaleimide, propylmaleimide, butylmaleimide, hexylmaleimide, octylmaleimide, dodecylmaleimide, stearylmaleimide, phenylmaleimide and cyclohexylmaleimide; nitrile group containing vinyl monomers, such as (meth)acrylonitrile; amide group containing vinyl monomers, such as (meth)acrylamide; vinyl esters, such as vinyl acetate, vinyl propionate, vinyl pivalate, vinyl benzoate and monomers of the VEOVA^{™} series available from Shell Chemical Company; vinyl and vinylidene halides; vinyl ethers such as vinyl ethyl ether; vinyl ketones including alkyl vinyl ketones, cycloalkyl vinyl ketones, aryl vinyl ketones, arylalkyl vinyl ketones, and arylcycloalkyl vinyl ketones; aromatic or heterocyclic aliphatic vinyl compounds; poly(meth)acrylates of alkane polyols, such as ethylene glycol di(meth)acrylate, propylene glycol di(meth)acrylate, butylene glycol di(meth)acrylate, neopentyl glycol di(meth)acrylate, hexylene glycol di(meth)acrylate, trimethylolpropane tri(meth)acrylate, glycerin tri(meth)acrylate, and pentaerythritol tetra(meth)acrylate; poly(meth)acrylates of oxyalkane polyols such as diethylene glycol di(meth)acrylate, dipropylene glycol di(meth)acrylate, triethylene glycol di(meth)acrylate, tetraethylene glycol di(meth)acrylate, dibutylene glycol di(meth)acrylate, di(pentamethylene glycol)dimethacrylate; polyethylene glycol di(meth)acrylates; and, bisphenol-A di(meth)acrylates, such as ethoxylated bisphenol-A (meth)acrylate ("EBIPMA").

Representative examples of other ethylenically unsaturated polymerizable non-ionic monomers c4) include, without limitation: ethylene glycol dimethacrylate (EGDMA); fumaric, maleic, and itaconic anhydrides, monoesters and diesters with C₁-C₄ alcohols such as methanol, ethanol, propanol, isopropanol, butanol, isobutanol, and tert-butanol. Representative examples of vinyl monomers include, without limitation, such compounds as: vinyl acetate; vinyl propionate; vinyl ethers, such as vinyl ethyl ether; and, vinyl ethyl ketone. Representative examples of aromatic or heterocyclic aliphatic vinyl compounds include, without limitation, such compounds as styrene, α-methyl styrene, vinyl toluene, tert-butyl styrene, 2-vinyl pyrrolidone, 5-ethylidene-2-norbornene and 1-, 3-, and 4-vinylcyclohexene.

For completeness, whilst the above described co-polymerizable acid monomers should typically be used in the form of free acid, it is not precluded that the constituent acid groups of the monomers be partially or completely neutralized with suitable bases, provided this does not compromise their participation in copolymerization.

### SECOND COMPONENT

The second component of the composition - effectively the hardener for the resins of the first component - necessarily comprises: d) i) at least one polyamine having at least two amine hydrogen atoms reactive towards epoxide groups; and, d) ii) at least one polythiol.

The composition of the present disclosure is characterized in that the molar ratio of active hydrogen atoms provided by said second component to the total of epoxide groups and ethylenically unsaturated groups provided by said first component is from 0.75: 1 to 1:1, for example from 0.8:1 to 1:1. For completeness, the total of epoxide and ethylenically unsaturated groups includes those epoxide and (meth)acrylate groups introduced in the epoxy (meth)acrylate compound(s) (a), any epoxide groups introduced in said optional epoxide functional compound (b) and any ethylenically unsaturated groups introduced by said optional monomer(s) (c).

The molar ratio terms above are intended to ensure that as limited an amount as possible of unreacted thiol- and amine-functional compounds are present in the cured product: such un-reacted compounds can be deleterious to the performance of that product. Desirably, the cured product should be essentially free of thiol- and amine-functional compounds.

### d) i) Polyamine Compound

The present composition comprises d) i) at least one polyamine having at least two amine hydrogen atoms reactive towards epoxide groups. compound. Herein, said at least one polyamine d) i) provides from 5 to 80% of the total number of active hydrogen atoms in the composition.

Within the constraints of that active hydrogen condition, said at least one polyamine compound d) i) should constitute from 1 to 50 wt.%, preferably from 1 to 40 wt.% or from 1 to 30 wt.% of said second hardener component. For example, the hardener component may comprise from 2 to 20 wt.% of d) i) said at least one polyamine.

The at least one polyamine d) i) having at least two amine hydrogens reactive toward epoxide groups should, in particular, contain primary and / or secondary amine groups and have an amine hydrogen equivalent weight (AHEW) of not more than 150 g/eq., preferably not more than 125 g/eq.

Suitable polyamines, which may be used alone or in combination, include but are not limited to the following:
i) Aliphatic, cycloaliphatic or arylaliphatic primary diamines of which the following examples may be mentioned: 2,2-dimethyl-1,3-propanediamine; 1,3-pentanediamine (DAMP) ; 1,5-pentanediamine; 1,5-diamino-2-methylpentane (MPMD); 2-butyl-2-ethyl-1,5-pentanediamine (C11-neodiamine); 1,6-hexanediamine (hexamethylenediamine, HMDA); 2,5-dimethyl-1,6-hexanediamine; 2,2,4-and / or 2,4,4-trimethylhexamethylenediamine; 1,7-heptanediamine; 1,8-octanediamine; 1,9-nonanediamine; 1,10-decanediamine; 1,11-undecanediamine; 1,12-dodecanediamine; 1,2-, 1,3- and 1,4-diaminocyclohexane; bis(4-aminocyclohexyl)methane; bis(4-amino-3-methylcyclohexyl)methane; bis(4-amino-3-ethylcyclohexyl)methane; bis(4-amino-3,5-dimethylcyclohexyl)methane; bis(4-amino-3-ethyl-5-methylcyclohexyl)methane; 1-amino-3-aminomethyl-3,5,5-trimethylcyclohexane (isophorone diamine, IPDA); 2- and / or 4-methyl-1,3-diaminocyclohexane; 1,3-bis (aminomethyl)-cyclohexane; 1,4-bis(aminomethyl)cyclohexane; 2,5 (2,6)-bis(aminomethyl)-bicyclo [2.2.1] heptane (norborane diamine, NBDA); 3(4),8(9)-bis(aminomethyl)tricyclo [5.2.1.0²,⁶]-decane (TCD-diamine); 1,4-diamino-2,2,6-trimethylcyclohexane (TMCDA); 1,8-menthanediamine; 3,9-bis(3-aminopropyl)-2,4,8,10-tetraoxaspiro [5.5] undecane; and, 1,3-bis(aminomethyl)benzene (MXDA).
ii) Tertiary amine group-containing polyamines with two or three primary aliphatic amine groups of which the following specific examples may be mentioned: N,N'-bis(aminopropyl)-piperazine; N,N'-bis(3-aminopropyl) methylamine; N,N'-bis(3-aminopropyl)ethylamine; N,N'-bis(3-aminopropyl)propylamine; N,N'-bis(3-aminopropyl) cyclohexylamine; N,N'-bis (3-aminopropyl)-2-ethyl-hexylamine; tris(2-aminoethyl)amine; tris(2-aminopropyl) amine; tris(3-aminopropyl) amine; and, the products from the double cyanoethylation and subsequent reduction of fatty amines derived from natural fatty acids, such as N,N'-bis(3-aminopropyl)dodecylamine and N,N'-bis(3-aminopropyl) tallow alkylamine, commercially available as Triameen Y12D and Triameen YT (from Akzo Nobel).
iii) Ether group-containing aliphatic primary polyamines of which the following specific examples may be mentioned: bis(2-aminoethyl) ether; 3,6-dioxaoctane-1,8-diamine; 4,7-dioxadecane-1,10-diamine; 4,7-dioxadecane-2,9-diamine; 4,9-dioxadodecane-1,12-diamine; 5,8-dioxadodecane-3,10-diamine; 4,7,10-trioxatridecane-1,13-diamine and higher oligomers of these diamines; bis(3-aminopropyl)polytetrahydrofuranes and other polytetrahydrofuran diamines; cycloaliphatic ether group-containing diamines obtained from the propoxylation and subsequent amination of 1,4-dimethylolcyclohexane, such as that material commercially available as Jeffamine RFD-270 (from Huntsman); polyoxyalkylenedi-or -triamines obtainable as products from the amination of polyoxyalkylenedi-and -triols and which are commercially available under the trade name of Jeffamine (from Huntsman), under the name of polyetheramine (from BASF) or under the trade name of PC Amine (from Nitroil). A particular preference may be noted for the use of Jeffamine D-230, Jeffamine D-400, Jeffamine D-600, Jeffamine D-2000, Jeffamine D-4000, Jeffamine T-403, Jeffamine T-3000, Jeffamine T-5000, Jeffamine EDR-104, Jeffamine EDR-148 and Jeffamine EDR-176, as well as corresponding amines from BASF or Nitroil;
iv) Primary diamines with secondary amine groups of which the following examples may be mentioned: 3-(2-aminoethyl)aminopropylamine; bis(hexamethylene) triamine (BHMT); diethylenetriamine (DETA); triethylenetetramine (TETA); tetraethylenepentamine (TEPA); pentaethylenehexamine (PEHA); higher homologs of linear polyethyleneamines, such as polyethylene polyamines with 5 to 7 ethyleneamine units (so-called "higher ethylenepolyamine", HEPA); products from the multiple cyanoethylation or cyanobutylation and subsequent hydrogenation of primary di-and polyamines with at least two primary amine groups, such as dipropylenetriamine (DPTA), N-(2-aminoethyl)-1,3-propanediamine (N3-amine), N,N'-bis(3-aminopropyl)ethylenediamine (N4-amine), N,N'-bis(3-aminopropyl)-1,4-diaminobutane, N-(3-aminopropyl)-2-methyl-1,5-pentanediamine, N-(3-aminopentyl)-1,3-pentanediamine, N-(3-amino-1-ethylpropyl)-2-methyl-1,5-pentanediamine or N,N'-bis(3-amino-1-ethylpropyl)-2-methyl-1,5-pentanediamine.
v) Polyamines with one primary and at least one secondary amino group of which the following examples may be mentioned: N-butyl-1,2-ethanediamine; N-hexyl-1,2-ethanediamine; N-(2-ethylhexyl)-1,2-ethanediamine; N-cyclohexyl-1,2-ethanediamine; 4-aminomethyl-piperidine; N-(2-aminoethyl)piperazine; N-methyl-1,3-propanediamine; N-butyl-1,3-propanediamine; N-(2-ethylhexyl)-1,3-propanediamine; N-cyclohexyl-1,3-propanediamine; 3-methylamino-1-pentylamine; 3-ethylamino-1-pentylamine; 3-cyclohexylamino-1-pentylamine; fatty diamines such as N-cocoalkyl-1,3-propanediamine; products from the Michael-type addition reaction of primary aliphatic diamines with acrylonitrile, maleic or fumaric acid diesters, citraconic acid diesters, acrylic and methacrylic acid esters, acrylic and methacrylic acid amides and itaconic acid diesters, reacted in a 1: 1 molar ratio; products from the partial reductive alkylation of primary polyamines with aldehydes or ketones, especially N-monoalkylation products of the previously mentioned polyamines with two primary amine groups and in particular of 1,6-hexanediamine, 1,5-diamino-2-methylpentane, 1,3-bis(aminomethyl)cyclohexane, 1,4-bis(aminomethyl)cyclohexane, 1,3-bis(aminomethyl)benzene, BHMT, DETA, TETA, TEPA, DPTA, N3-amine and N4-amine, wherein preferred alkyl groups are benzyl, isobutyl, hexyl and 2-ethylhexyl; and, partially styrenated polyamines such as those commercially available as Gaskamine^{®} 240 (from Mitsubishi Gas Chemical).
vi) Secondary diamines and, in particular, N,N'-dialkylation products of the previously mentioned polyamines with two primary amine groups, especially N,N'-dialkylation products of 1,6-hexanediamine, 1,5-diamino-2-methylpentane, 1,3-bis(aminomethyl)cyclohexane, 1,4-bis(aminomethyl)-cyclohexane, 1,3-bis(aminomethyl)benzene, BHMT, DETA, TETA, TEPA, DPTA, N3-amine or N4-amine, wherein preferred alkyl groups are 2-phenylethyl, benzyl, isobutyl, hexyl and 2-ethylhexyl.
vii) Aromatic polyamines of which mention may be made of: m-and p-phenylenediamine; 4,4'-, 2,4'-and 2,2'-diaminodiphenylmethane; 3,3'-dichloro-4,4'-diaminodiphenylmethane (MOCA); 2,4- and 2,6-tolylenediamine; mixtures of 3,5-dimethylthio-2,4- and -2,6-tolylenediamine (available as Ethacure^{®} 300 from Albermarle); mixtures of 3,5-diethyl-2, 4- and 2,6-tolylene diamine (DETDA); 3,3',5,5'-tetraethyl-4,4'-diaminodiphenylmethane (M-DEA); 3,3',5,5'-tetraethyl-2,2'-dichloro-4,4'-diaminodiphenylmethane (M-CDEA); 3,3'-diisopropyl-5,5'-dimethyl-4,4'-diaminodiphenylmethane (M-MIPA); 3,3',5,5'-tetraisopropyl-4,4'-diaminodiphenylmethane (M-DIPA); 4,4'-diamino diphenyl-sulfone (DDS); 4-amino-N-(4-aminophenyl) benzenesulfonamide; 5,5'-methylenedianthranilic acid; dimethyl-(5,5'-methylenedianthranilate); 1,3-propylene-bis(4-aminobenzoate); 1,4-butylene-bis(4-aminobenzoate); polytetramethylene oxide-bis(4-aminobenzoate) (available as Versalink^{®} from Air Products); 1,2-bis(2-aminophenylthio)ethane, 2-methylpropyl-(4-chloro-3,5-diaminobenzoate) ; and, *t*-butyl-(4-chloro-3,5-diaminobenzoate).
viii) Polyamidoamines of which indicative members include the reaction products of monohydric or polyhydric carboxylic acids or the esters or anhydrides thereof, in particular dimer fatty acids and an aliphatic, cycloaliphatic or aromatic polyamine, for instance polyalkyleneamines such as DETA or TETA. Commercially available polyamidoamines include: Versamid^{®} 100, 125, 140 and 150 (from Cognis); Aradur^{®} 223, 250 and 848 (from Huntsman); Euretek^{®} 3607 and 530 (from Huntsman); and, Beckopox^{®} EH 651, EH 654, EH 655, EH 661 and EH 663 (from Cytec).
ix) Mannich bases such as phenalkamines and, in particular, phenalkamines obtained from the condensation of cardanol (CAS Number: 37330-39-5), an aldehyde and an amine. The reactant amine in such a condensation reaction is desirably ethylenediamine or diethyltriamine. Mannich bases and phenalkamines are known in the art and suitable examples include the commercially available phenalkamines Cardolite ^{®} NC-541, NC-557, NC-558, NC-566, Lite 2001 and Lite 2002 (available from Cardolite), Aradur^{®} 3440, 3441, 3442 and 3460 (available from Huntsman) and Beckopox^{®} EH 614, EH 621, EH 624, EH 628 and EH 629 (available from Cytec).

Preferred among the aforementioned polyamines are: Ancamine 2678, Ancamine 1767, Ancamine 2636 and Ancamine 2641 (available from Evonik Corporation); NX-5607, NC-557, NC-566 and NX-5608 (available from Cardolite Corporation; and, DETA, TETA, TEPA and AEP (available from Tosoh Corporation).

### d) ii) Polythiol

The present composition comprises d) ii) at least one polythiol. Herein, said at least one polythiol d) ii) provides from 20 to 95% of the total number of active hydrogen atoms in the composition.

Within the constraints of that active hydrogen condition, d) ii) said at least one polythiol should comprise from 50 to 99 wt.%, preferably from 60 to 99 wt.% or from 70 to 99 wt.% of said hardener component b). For example, the hardener component may comprise from 80 to 98 wt.%, of d) ii) said at least one polythiol.

In a preferred embodiment, the or each polythiol included in the composition should possess from 2 to 5 thiol groups, for example from 2 to 4 thiol groups. Independently of or additional to that functionality condition, it is preferred that the or each polythiol included in the composition should have a thiol equivalent weight of from 100 to 700 g/eq, for example from 100 to 250 g/eq.

Suitable thiol-group containing compounds, which may be used alone or in combination, include but are not limited to the following.
- Liquid thiol(SH)-terminated polysulfide polymers of which commercial examples include: Thiokol^{®} polymers (available from Morton Thiokol), in particular the types LP-3, LP-33, LP-980, LP-23, LP-55, LP-56, LP-12, LP-31, LP-32 and LP-2 thereof; and, Thioplast^{®} polymers (from Akzo Nobel), in particular the types G10, G112, G131, G1, G12, G21, G22, G44 and G 4.
- Thiol(SH)-terminated polyoxyalkylene ethers, obtainable by reacting polyoxyalkylene di- and -triols either with epichlorohydrin or with an alkylene oxide, followed by sodium hydrogen sulfide.
- Thiol(SH)-terminated compounds in the form of polyoxyalkylene derivatives, known under the trade names of GPM-800^{™} (from Gabriel Performance Products) and of Capcure^{®} (from Cognis), in particular the types WR-8, LOF and 3-800 thereof.
- Thiol(SH)-terminated polythioethers.
- Polyesters of thiocarboxylic acids such as mercaptoacetic acid (*thioglycolic acid*)*,* mercaptopropionic acid, mercaptobenzoic acid and mercaptosuccinic acid. Particular examples of such polyesters include: ethylene glycol bisthioglycolate; 1,4-butanediolbis(thioglycolate); 1,6-hexanediolbis(thioglycolate); trimethylolpropane tristhioglycolate; pentaerythritol tetrakisthioglycolate; pentaerythritol tetramercaptoacetate; pentaerythritol terakis(3-mercaptopropionate); trimethylolpropane trimercaptoacetate (TMPMP); glycol dimercaptoacetate; and, the esterification products of polyoxyalkylene diols and triols, ethoxylated trimethylolpropane and polyester diols with thiocarboxylic acids such as mercaptoacetic acid (thioglycolic acid) and 2-or 3-mercaptopropionic acid.
- 1,3,5-trimercaptomethylbenzene, 4,4'-thiodibenzenethiol, 1,3,5-trimercaptomethyl-2,4,6-trimethylbenzene, 2,4,6-trimercapto-1,3,5-triazine, 2-dibutylamino-4,6-dimercapto-s-triazine, 2,2'-(ethylenedioxy)-diethanethiol (triethylene glycol dimercaptan), ethanedithiol, 1,3-propanedithiol and / or 1,4-butanedithiol.
- Tris(2-(mercaptopropionyloxy)ethyl)isocyanate.

Further examples of commercially available polythiol compounds having utility herein include: Polythiol QE-340M available from Toray Fine Chemicals Co., Ltd; THIOCURE^{®} ETTMP available from Bruno Bock Chemische Fabrik GmbH & Co. KG; JER Mate QX11, QX12, JER Cure QX30, QX40, QX60 and QX900 available from Japan Epoxy Resin; and, KF-2001, KF-2004, X-22-167B available from Shin-Etsu Industries.

A preference for the use ofthiol(SH)-terminated polyoxyalkylene ethers and the polyesters of thiocarboxylic acids is acknowledged. A particular preference for the use of at least one of pentaerythritol tetramercaptoacetate, pentaerythritol tetrakis(3-mercaptopropionate), trimethylolpropane trimercaptoacetate (TMPMP), tris(2-(mercaptopropionyloxy)ethyl)isocyanate and glycol dimercaptoacetate is noted.

### Additives and Adjunct Ingredients

Said compositions obtained in the present invention will typically further comprise adjuvants and additives that can impart improved properties to these compositions. For instance, the adjuvants and additives may impart one or more of: improved elastic properties; improved elastic recovery; longer enabled processing time; faster curing time; and, lower residual tack. Included among such adjuvants and additives - which independently of one another may be included in single components or both components of a two (2K) component composition - are catalysts, plasticizers, stabilizers including UV stabilizers, antioxidants, tougheners, fillers, drying agents, adhesion promoters, fungicides, flame retardants, rheological adjuvants, color pigments or color pastes, solvents and non-reactive diluents.

For completeness, it is noted that in general adjunct materials and additives which contain epoxide-reactive groups or (meth)acrylate reactive groups will be blended into the hardener component of the two (2K) component composition. Materials that contain epoxide groups, (meth)acrylate groups or which are reactive with the hardener(s) are generally formulated into the first component of the two (2K) component composition. Unreactive materials may be formulated into either or both of the first and second components.

Such adjuvants and additives can be used in such combination and proportions as desired, provided they do not adversely affect the nature and essential properties of the composition. While exceptions may exist in some cases, these adjuvants and additives should not *in toto* comprise more than 50 wt.% of the total composition and preferably should not comprise more than 20 wt.% of the composition.

The composition of the present composition may optionally include a Michael addition catalyst, which herein refers to a compound capable of promoting a Michael addition reaction between the polythiol compound and the (meth)acrylic group bearing compound(s). Conventionally, Michael addition catalysts include amine-based catalysts, base catalysts and organometallic catalysts, which types may be used alone or in combination. Exemplary amine-based catalysts include: proline; triazabicyclodecene (TBD); diazabicycloundecene (DBU); hexahydro methyl pyrimido pyridine (MTBD); diazabicyclononane (DBN); tetramethylguanidine (TMG); and, triethylenediamine (TED, *1,4-diazabicyclo[2.2.2]octane*)*.* Examples of the base catalysts include: sodium methoxide; sodium ethoxide; potassium t-butoxide; potassium hydroxide; sodium hydroxide; sodium metal; lithium diisopropylamide (LDA); and, butyllithium. Exemplary organometallic catalysts include: ruthenium catalysts such as (cyclooctadiene)(cyclooctatriene)ruthenium and ruthenium hydride; iron catalysts such as iron(III)chloride and iron acetylacetonate; nickel catalysts such as nickel acetylacetonate, nickel acetate and nickel salicylaldehyde; copper catalysts; palladium catalysts; scandium catalysts; lanthanum catalysts; ytterbium catalysts; and, tin catalysts.

Michael addition catalysts may be employed herein in an amount of from 0 to 5 wt.%, for example from 0 to 2 wt.%, based on the weight of the composition. It is however repeated that such Michael addition catalysts need not be present in the composition and indeed, in a preferred embodiment, the composition is substantially free of Michael addition catalysts.

A *"plasticizer"* for the purposes of this invention is a substance that decreases the viscosity of the composition and thus facilitates its processability. Herein the plasticizer may constitute up to 5 wt.%, based on the total weight of the composition, and is preferably selected from the group consisting of: polydimethylsiloxanes (PDMS); diurethanes; ethers of monofunctional, linear or branched C4-C16 alcohols, such as Cetiol OE (obtainable from Cognis Deutschland GmbH, Düsseldorf); esters of abietic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying fatty acids; glycolic acid esters; benzoic acid esters; phosphoric acid esters; sulfonic acid esters; trimellitic acid esters; polyether plasticizers, such as end-capped polyethylene or polypropylene glycols; polystyrene; hydrocarbon plasticizers; chlorinated paraffin; and, mixtures thereof. It is noted that, in principle, phthalic acid esters can be used as the plasticizer but these are not preferred due to their toxicological potential. It is preferred that the plasticizer comprises or consists of one or more polydimethylsiloxane (PDMS).

*"Stabilizers"* for purposes of this invention are to be understood as antioxidants, UV stabilizers or hydrolysis stabilizers. Herein stabilizers may constitute *in toto* up to 10 wt.% or up to 5 wt.%, based on the total weight of the composition. Standard commercial examples of stabilizers suitable for use herein include: sterically hindered phenols; thioethers; benzotriazoles; benzophenones; benzoates; cyanoacrylates; acrylates; amines of the hindered amine light stabilizer (HALS) type; phosphorus; sulfur; and, mixtures thereof.

Those compositions of the present invention may optionally contain a toughening rubber in the form of in the form of core-shell particles dispersed in the epoxy resin matrix. The term *"core shell rubber"* or CSR is being employed in accordance with its standard meaning in the art as denoting a rubber particle core formed by a polymer comprising an elastomeric or rubbery polymer as a main ingredient and a shell layer formed by a polymer which is graft polymerized onto the core. The shell layer partially or entirely covers the surface of the rubber particle core in the graft polymerization process. By weight, the core should constitute at least 50 wt.% of the core-shell rubber particle.

The polymeric material of the core should have a glass transition temperature (T_{g}) of no greater than 0⁰C and preferably a glass transition temperature (T_{g}) of -20°C or lower, more preferably -40°C or lower and even more preferably -60°C or lower. The polymer of the shell is non-elastomeric, thermoplastic or thermoset polymer having a glass transition temperature (T_{g}) of greater than room temperature, preferably greater than 30°C and more preferably greater than 50°C.

Without intention to limit the invention, the core may be comprised of: a diene homopolymer, for example, a homopolymer of butadiene or isoprene; a diene copolymer, for example a copolymer of butadiene or isoprene with one or more ethylenically unsaturated monomers, such as vinyl aromatic monomers, (meth)acrylonitrile or (meth)acrylates; polymers based on (meth)acrylic acid ester monomers, such as polybutylacrylate; and, polysiloxane elastomers such as polydimethylsiloxane and crosslinked polydimethylsiloxane.

Similarly, without intention to limit the present invention, the shell may be comprised of a polymer or copolymer of one or more monomers selected from: (meth)acrylates, such as methyl methacrylate; vinyl aromatic monomers, such as styrene; vinyl cyanides, such as acrylonitrile; unsaturated acids and anhydrides, such as acrylic acid; and, (meth)acrylamides. The polymer or copolymer used in the shell may possess acid groups that are cross-linked ionically through metal carboxylate formation, in particular through forming salts of divalent metal cations. The shell polymer or copolymer may also be covalently cross-linked by monomers having two or more double bonds per molecule.

It is preferred that any included core-shell rubber particles have an average particle size (d50) of from 10nm to 300nm, for example from 50 nm to 200 nm: said particle size refers to the diameter or largest dimension of a particle in a distribution of particles and is measured via dynamic light scattering.

The present application does not preclude the presence of two types of core shell rubber (CSR) particles with different particle sizes in the composition to provide a balance of key properties of the resultant cured product, including shear strength, peel strength and resin fracture toughness. In this embodiment, smaller included particles (1^{st} CSR type) may have an average particle size of from 10 to 100 nm and larger included particles (2^{nd} CSR type) may have an average particle size of from 120 nm to 300 nm, for example from 150 to 300 nm. The smaller core shell rubber particles should typically be employed in excess of the larger particles on a weight basis: a weight ratio of smaller CSR particles to larger CSR particles of from 3:1 to 5:1 may be employed for instance.

The core-shell rubber may be selected from commercially available products, examples of which include: Paraloid EXL 2650A, EXL 2655 and EXL2691 A, available from The Dow Chemical Company; the Kane Ace^{®} MX series available from Kaneka Corporation, and in particular MX 120, MX 125, MX 130, MX 136, MX 551, MX553; and, METABLEN SX-006 available from Mitsubishi Rayon.

The core shell rubber particles should be included in the composition in an amount of from 0 to 10 wt.%, for example from 0 to 5 wt.% based on the total weight of the composition.

As noted, the compositions according to the present invention can additionally contain fillers. Suitable here are, for example, chalk, lime powder, precipitated and/or pyrogenic silicic acid, zeolites, bentonites, magnesium carbonate, diatomite, alumina, clay, talc, titanium oxide, iron oxide, zinc oxide, sand, quartz, flint, mica, glass powder, and other ground mineral substances. Organic fillers can also be used, in particular carbon black, graphite, wood fibers, wood flour, sawdust, cellulose, cotton, pulp, cotton, wood chips, chopped straw, chaff, ground walnut shells, and other chopped fibers. Short fibers such as glass fibers, glass filament, polyacrylonitrile, carbon fibers, Kevlar fibers, or polyethylene fibers can also be added. Aluminum powder is likewise suitable as a filler.

The pyrogenic and/or precipitated silicic acids advantageously have a BET surface area from 10 to 90 m²/g. When they are used, they do not cause any additional increase in the viscosity of the composition according to the present invention, but do contribute to strengthening the cured composition.

It is likewise conceivable to use pyrogenic and/or precipitated silicic acids having a higher BET surface area, advantageously from 100 to 250 m²/g, in particular from 110 to 170 m²/g, as a filler: because of the greater BET surface area, the effect of strengthening the cured composition is achieved with a smaller proportion by weight of silicic acid.

Also suitable as fillers are hollow spheres having a mineral shell or a plastic shell. These can be, for example, hollow glass spheres that are obtainable commercially under the trade names Glass Bubbles^{®}. Plastic-based hollow spheres, such as Expancel^{®} or Dualite^{®}, may be used and are described in EP 0 520 426 B1: they are made up of inorganic or organic substances and each have a diameter of 1 mm or less, preferably 500 µm or less.

Fillers which impart thixotropy to the composition may be preferred for many applications: such fillers are also described as rheological adjuvants, e.g. hydrogenated castor oil, fatty acid amides, or swellable plastics such as PVC.

The total amount of fillers present in the compositions of the present invention will preferably be from 0 to 30 wt.%, and more preferably from 0 to 20 wt.%, based on the total weight of the composition. The desired viscosity of the curable composition will typically be determinative of the total amount of filler added and it is submitted that in order to be readily extrudable out of a suitable dispensing apparatus - such as a tube - the curable compositions should possess a viscosity of from 3000 to 150,000 mPas.

It is noted that compounds having metal chelating properties may be used in the compositions of the present invention to help enhance the adhesion of the cured adhesive to a substrate surface. Further, also suitable for use as adhesion promoters are the acetoacetate-functionalized modifying resins sold by King Industries under the trade name K-FLEX XM-B301.

Examples of suitable pigments are titanium dioxide, iron oxides, or carbon black.

In order to enhance shelf life even further, it is often advisable to further stabilize the compositions of the present invention with respect to moisture penetration through using drying agents.

The presence of solvents and non-reactive diluents in the compositions of the present invention is also not precluded where this can usefully moderate the viscosities thereof. For instance, but for illustration only, the compositions may contain one or more of: alkane and halogenated alkane solvents; cycloalkane solvents, such as cyclopentane and cyclohexane; aromatic solvents, such as benzene, toluene, ethyl benzene, xylene diphenylmethane and diisopropylnaphthalene; ether solvents, such as ethylene glycol dimethyl ether, ethylene glycol diethyl ether, ethylene glycol dibutyl ether and ethylene glycol diphenyl ether; N-methylpyrrolidone; petroleum fractions such as Solvesso^{®} products (available from Exxon); ester solvents, such as adipates, sebacates, phthalates and benzoates; organic phosphoric or sulfonic acid esters; and, sulfonamides.

The above aside, it is preferred that said solvents and non-reactive diluents constitute *in toto* less than 10 wt.%, in particular less than 5 wt.% or less than 2 wt.%, based on the total weight of the composition.

### Illustrative Embodiment of the Two Component Composition

In an illustrative embodiment which is not intended to be limiting of the present invention, the snap curable, two component (2K) composition comprises:
a first component comprising, based on the weight of said component:
   from 70 to 100 wt.%, preferably from 80 to 100 wt.% of a) at least one epoxy (meth)acrylate compound, wherein said compound has at least one (meth)acrylate group and at least one epoxide group and is obtainable as an adduct of (meth)acrylic acid and a polyepoxide compound selected from the group consisting of: polyglycidyl ethers of polyhydric alcohols; polyglycidyl ethers of polyhydric phenols; polyglycidyl esters of polycarboxylic acids; and, epoxidized polyethylenically unsaturated hydrocarbons;
   from 0 to 15 wt.%, preferably from 0 to 10 wt.% of b) at least one epoxide compound not having (meth)acrylate functionality; and,
   from 0 to 15 wt.%, preferably from 0 to 10 wt.% of c) at least one ethylenically unsaturated non-ionic monomer not having epoxide functionality;
a second component comprising:
   d) i) at least one polyamine having at least two amine hydrogen atoms reactive towards epoxide groups, wherein said at least one polyamine contains primary and / or secondary amine groups and has an amine hydrogen equivalent weight (AHEW) of not more than 150 g/eq; and,
   d) ii) at least one polythiol compound, wherein said at least one polythiol compound has a thiol equivalent weight of from 100 to 250 g/eq. and is selected from polyesters of thiocarboxylic acids or thiol(SH)-terminated polyoxyalkylene ethers,
   wherein the composition is characterized in that:
   the molar ratio of active hydrogen atoms provided by said second component to the total of epoxide groups and ethylenically unsaturated groups provided by said first component is from 0.8:1 to 1:1;
   said at least one polyamine d) i) provides from 5 to 80% of the total number of active hydrogen atoms in the composition; and,
   said at least one polythiol d) ii) provides from 20 to 95% of the total number of active hydrogen atoms in the composition.

### METHODS AND APPLICATIONS

For the two component (2K) curable compositions, the reactive components are brought together and mixed in such a manner as to induce the hardening thereof: the reactive compounds should be mixed under sufficient shear forces to yield a homogeneous mixture. It is considered that this can be achieved without special conditions or special equipment. That said, suitable mixing devices might include: static mixing devices; magnetic stir bar apparatuses; wire whisk devices; augers; batch mixers; planetary mixers; C.W. Brabender or Banburry^{®} style mixers; and, high shear mixers, such as blade-style blenders and rotary impellers.

For small-scale applications in which volumes of less than 2 liters will generally be used, the preferred packaging for the two component (2K) compositions will be side-by-side double cartridges or coaxial cartridges, in which two tubular chambers are arranged alongside one another or inside one another and are sealed with pistons: the driving of these pistons allows the components to be extruded from the cartridge, advantageously through a closely mounted static or dynamic mixer. For larger volume applications, the two components of the composition may advantageously be stored in drums or pails: in this case the two components are extruded via hydraulic presses, in particular by way of follower plates, and are supplied via pipelines to a mixing apparatus which can ensure fine and highly homogeneous mixing of the hardener and binder components. In any event, for any package it is important that the binder component be disposed with an airtight and moisture-tight seal, so that both components can be stored for a long time, ideally for 12 months or longer.

Non-limiting examples of two component dispensing apparatuses and methods that may be suitable for the present invention include those described in U.S. Patent No. 6,129,244 and US Patent No. 8,313,006.

The two (2K) component curable compositions should broadly be formulated to exhibit an initial viscosity - determined immediately after mixing, for example, up to two minutes after mixing - of less than 50000 mPa·s at 25°C. Independently of or additional to said viscosity characteristics, the two (2K) component composition should be formulated to be bubble (foam) free upon mixing and subsequent curing.

As noted above, the two component (2K) composition of the present disclosure are room temperature snap curable. That said, the curing of the compositions of the invention can occur at temperatures in the range of from -10°C to 120°C, for instance from 0°C to 70°C, and in particular from 20°C to 60°C. The temperature that is suitable depends on the specific compounds present and the desired curing rate and can be determined in the individual case by the skilled artisan, using simple preliminary tests if necessary. Of course, curing at temperatures of from 10°C to 35°C or from 20°C to 30°C is especially advantageous as it obviates the requirement to substantially heat or cool the mixture from the usually prevailing ambient temperature. Where applicable, however, the temperature of the mixture formed from the respective components of the two (2K) component composition may be raised above the mixing temperature and / or the application temperature using conventional means, including microwave induction.

As noted, the compositions of the present invention demonstrate snap curability at room temperature. In addition, the present compositions demonstrate partial curing under photo-irradiation which might have some utility in certain applications - such as in the preparation of film adhesives discussed below - where exposure to thermal curing conditions is intentionally delayed. The energy source used to promote the partial photo-curing of the applied compositions will emit at least one of ultraviolet (UV) radiation, infrared (IR) radiation, visible light, X-rays, gamma rays, or electron beams (e-beam).

Irradiating ultraviolet light should typically have a wavelength of from 150 to 600 nm and preferably a wavelength of from 200 to 450 nm. Useful sources of UV light include, for instance, extra high-pressure mercury lamps, high pressure mercury lamps, medium pressure mercury lamps, low intensity fluorescent lamps, metal halide lamps, microwave powered lamps, xenon lamps, UV-LED lamps and laser beam sources such as excimer lasers and argon-ion lasers.

Where an e-beam is utilized to cure the applied composition, standard parameters for the operating device may be: an accelerating voltage of from 0.1 to 100 keV; a vacuum of from 10 to 10⁻³ Pa; an electron current of from 0.0001 to 1 ampere; and, power of from 0.1 watt to 1 kilowatt.

The amount of radiation necessary to induce partial curing of an individual composition will depend on a variety of factors including the angle of exposure to the radiation and the thickness of an applied composition. Broadly, however, a curing dosage of from 5 to 5000 mJ/cm² may be cited as being typical: curing dosages of from 50 to 500 mJ/cm², such as from 50 to 400 mJ/cm² may be considered highly effective.

The curable compositions according to the invention may find utility *inter alia* in: casting resins; varnishes; binding agents for fibers and / or particles; the coating of glass; the coating of mineral building materials, such as lime- and / orcement-bonded plasters, gypsum-containing surfaces, fiber cement building materials and concrete; the coating and sealing of wood and wooden materials, such as chipboard, fiber board and paper; the coating of metallic surfaces; the coating of asphalt- and bitumen-containing pavements; the coating and sealing of various plastic surfaces; and, the coating of leather and textiles.

In a first preferred embodiment, the composition of the present invention is applied to substrates to produce an adherent, highly abrasion resistant coating. The coating operation can often be performed at room temperature and effective abrasion resistance can be attained after curing. Moreover, when coating the surface of mechanical structures or a floor or pavement, the compositions can provide corrosion protection for the surface and can prevent the surface from being contacted with compounds which would deleterious to the operation or efficiency of the specific structure.

In a particularly preferred embodiment, the composition of the present invention is used for the bonding of first and second substrates: the composition will be applied between the two substrates and permitted to cure, optionally under the application of heat and / or pressure. In one embodiment, the composition may be applied to at least one surface (S¹) of a first substrate and to at least one surface (S²) of a second substrate and the respective surfaces (S¹, S²) of the first and second substrates contacted to interpose the composition. In an alternative embodiment, the composition may be applied only to a surface of the first substrate and that surface is then brought into contact with the second substrate.

The first and second substrates may be the same or different but in either case are not particularly restricted. The substrates to be bonded may, for example, comprise or consist of: ferrous metallic materials, such as iron, stainless steel, cold-rolled steel and electro-galvanized steel; non-ferrous metallic materials, such as aluminium, zinc and alloys thereof; silicon materials such as glass, monocrystal silicon, polycrystal silicon, amorphous silicon or silicon oxide; engineered plastics; thermoplastic materials such as polyolefins, of which polyethylene (PE) and polypropylene (PP) may be mentioned, polybutylene terephthalate (PBT), polycarbonate (PC) and acrylonitrile butadiene styrene (ABS); and, carbon materials, such as carbon fiber.

For completeness, the shape of the first and second substrates is also not particularly restricted, provided that the substrates have a shape which can be bonded. Desirably the first substrate to be bonded will possess a surface which has a shape complementary to a surface of the second substrate, allowing the first and second substrates to be mated with the composition disposed therebetween.

In each of the above-described applications, the compositions may be applied by conventional application methods such as: brushing; roll coating using, for example, a 4-application roll equipment where the composition is solvent-free or a 2-application roll equipment for solvent-containing compositions; doctor-blade application; printing methods; and, spraying methods, including but not limited to air-atomized spray, air-assisted spray, airless spray and high-volume low-pressure spray. For coating and adhesive applications, it is recommended that the compositions be applied to a wet film thickness of from 10 to 500 µm. The application of thinner layers within this range is more economical and provides for a reduced likelihood of thick cured regions that may - for coating applications - require sanding. However, great control must be exercised in applying thinner coatings or layers so as to avoid the formation of discontinuous cured films.

For completeness, it is noted that the present invention does not preclude the preparation of the composition in the form of a *"film adhesive".* A pre-polymer mixture of a) said epoxide functional resin(s), the hardener, and other desired components is applied as a coating onto a polymer film substrate, rolled up and stored at a sufficiently low temperature to inhibit the chemical reactions between the components. When needed, the film adhesive is removed from the low temperature environment and applied to a substrate, such as a metal or composite part, the polymeric backing film is stripped off and the assembly completed and cured, optionally at an elevated temperature in an oven or autoclave.

The following examples are illustrative of the present invention and are not intended to limit the scope of the invention in any way.

### EXAMPLES

The following commercial products were used in the Examples:
- HCT-1:: 50% acrylated bisphenol A epoxy resin having a total epoxy and acrylate equivalent weight of 225 g/eq., supplied by Henkel Corporation.
- UVACURE 1561: Partially acrylated bisphenol A epoxy resin having a total epoxy and acrylate equivalent weight of 225 g/eq., supplied by Daicel-Allnex Ltd.
- JER 828: Bisphenol A epoxy resin having an epoxy equivalent weight of 190 g/eq., supplied by Mitsubishi Chemical Corporation.
- PEMP:: Pentaerythritol tetrakis (3-mercaptopropionate) supplied by SC Organic Chemical Co. Ltd. PEMP has a thiol equivalent weight of 122 g/eq.
- Polythiol QE-340M:: Polythiol compound (*thiol terminated polyether*) having a thiol equivalent weight of 150 g/eq. supplied by Toray Fine Chemicals Co., Ltd.
- Ancamine 2678:: Amine curing agent having an amine hydrogen equivalent weight (AHEW) of 30 g/eq., supplied by Evonik Corporation.

### Examples 1-4 and Comparative Examples 5-6

Compositions were prepared in accordance with Table 1 herein below. The two components were brought together and mixed in a speed mixer (1200 rpm; 1 minute) to ensure the formation of a homogenous mixture.

**Table 1**

| **Component** | **Ingredient** | **Example 1 (wt.%)** | **Example 2 (wt.%)** | **Example 3 (wt.%)** | **Example 4 (wt.%)** | **Comparative Example 5 (wt.%)** | **Comparative Example 6 (wt.%)** |
|---|---|---|---|---|---|---|---|
| **1^{st}** | HCT-1 | 64.0 | | 71.0 | 70.0 | | 88.0 |
| | Uvacure 1561 | | 64.0 | | | | |
| | JER 828 | | | | | 60.0 | |
| **2^{nd}** | Polythiol QE-340M | 34.2 | 34.2 | 24.1 | | 38.0 | |
| | Ancamine 2678 | 1.8 | 1.8 | 4.9 | 3.0 | 2.0 | 12.0 |
| | PEMP | | | | 27.0 | | |

Following mixing, the gel time of 1g by weight of each composition was determined at 25°C and 50% Relative Humidity (RH) using a Gardner Standard Model Gel Timer. The results are provided in Table 2 herein below.

**Table 2**

| | **Example 1** | **Example 2** | **Example 3** | **Example 4** | **Comparative Example 5** | **Comparative Example 6** |
|---|---|---|---|---|---|---|
| **Gel Time** (s) | 20 | 25 | 35 | 30 | 1185 | 450 |

In view of the foregoing description and examples, it will be apparent to those skilled in the art that equivalent modifications thereof can be made without departing from the scope of the claims.

## Claims

1. A two component (2K) composition which is snap curable at room temperature, said composition comprising:
a first component comprising, based on the weight of said component:
from 60 to 100 wt.% of a) at least one epoxy (meth)acrylate compound, said compound having at least one (meth)acrylate group and at least one epoxide group;
from 0 to 20 wt.% of b) at least one epoxide compound not having (meth)acrylate functionality; and,
from 0 to 20 wt.% of c) at least one ethylenically unsaturated non-ionic monomer not having epoxide functionality;
a second component comprising:
d) i) at least one polyamine having at least two amine hydrogen atoms reactive towards epoxide groups; and,
d) ii) at least one polythiol,
wherein the composition is **characterized in that** the molar ratio of active hydrogen atoms provided by said second component to the total of epoxide groups and ethylenically unsaturated groups provided by said first component is from 0.75:1 to 1:1.

2. The two component (2K) composition according to claim 1 comprising:
a first component comprising, based on the weight of said component:
from 70 to 100 wt.%, preferably from 80 to 100 wt.% of a) said at least one epoxy (meth)acrylate compound, said compound having at least one (meth)acrylate group and at least one epoxide group;
from 0 to 15 wt.%, preferably from 0 to 10 wt.% of b) said at least one epoxide compound not having (meth)acrylate functionality; and,
from 0 to 15 wt.%, preferably from 0 to 10 wt.% of c) said at least one ethylenically unsaturated non-ionic monomer not having epoxide functionality;
a second component comprising:
d) i) at least one polyamine having at least two amine hydrogen atoms reactive towards epoxide groups; and,
d) ii) at least one polythiol,
wherein the composition is **characterized in that** the molar ratio of active hydrogen atoms provided by said second component to the total of epoxide groups and ethylenically unsaturated groups provided by said first component is from 0.8:1 to 1:1.

3. The two component (2K) composition according to claim 1 or claim 2, wherein said at least one epoxy (meth)acrylate compound a) is **characterized by** an equivalent weight of the total of said epoxide and said (meth)acrylate groups of from 100 to 700 g/eq, preferably 120 to 320 g/eq.

4. The two component (2K) composition according to any one of claims 1 to 3, wherein said at least one epoxy (meth)acrylate compound is an adduct of (meth)acrylic acid and a polyepoxide compound.

5. The two component (2K) composition according to claim 4, wherein said polyepoxide compound is selected from the group consisting of: polyglycidyl ethers of polyhydric alcohols; polyglycidyl ethers of polyhydric phenols; polyglycidyl esters of polycarboxylic acids; and, epoxidized polyethylenically unsaturated hydrocarbons.

6. The two component (2K) composition according to claim 4 or claim 5, wherein said polyepoxide is a diglycidyl ether selected from the group consisting of: diglycidyl ethers of aliphatic and cycloaliphatic diols; bisphenol A based diglycidylethers; bisphenol F diglycidyl ethers; polyalkyleneglycol based diglycidyl ethers; and, polycarbonatediol based glycidyl ethers.

7. The two component (2K) composition according to any one of claims 1 to 6, wherein:
said at least one polyamine d) i) provides from 5 to 80% of the total number of active hydrogen atoms in the composition; and,
said at least one polythiol d) ii) provides from 20 to 95% of the total number of active hydrogen atoms in the composition.

8. The two component (2K) composition according to claim 7, wherein said second component comprises, based on the weight of said component:
from 1 to 50 wt.%, preferably from 1 to 40 wt.%, more preferably from 2 to 20 wt.% of d) i) said at least one polyamine compound.
from 50 to 99 wt.%, preferably from 60 to 99 wt.%, more preferably from 80 to 98 wt.% of d) ii) said at least one polythiol.

9. The two component (2K) composition according to any one of claims 1 to 8, wherein d) i) said at least one polyamine contains primary and / or secondary amine groups and has an amine hydrogen equivalent weight (AHEW) of not more than 150 g/eq.

10. The two component (2K) composition according to any one of claims 1 to 9, wherein d) ii) said at least one polythiol has from 2 to 5 thiol groups.

11. The two component (2K) composition according to any one of claims 1 to 10, wherein d) ii) said at least one polythiol has a thiol equivalent weight of from 100 to 700 g/eq, preferably from 100 to 250 g/eq.

12. The two component (2K) composition according to any one of claims 1 to 11, wherein d) ii) said at least one polythiol is selected from polyesters of thiocarboxylic acids or thiol(SH)-terminated polyoxyalkylene ethers.

13. The two component (2K) composition according to any one of claims 1 to 12 which is substantially free of free-radical photoinitiators.

14. The two component (2K) composition according to any one of claims 1 to 13 which is substantially free of thermal free-radical initiators.

15. Use of the two component (2K) composition as defined in any one of claims 1 to 14 as a coating, adhesive or sealant.
